(19) Europäisches Patentamt
European Patent Office
Office européen des brevets

(11) Publication number: **0 024 933**
**B1**

(12) **EUROPEAN PATENT SPECIFICATION**

(45) Date of publication of patent specification: **06.06.84**

(21) Application number: **80303005.5**

(22) Date of filing: **29.08.80**

(51) Int. Cl.³: **C 08 F 10/00**, C 08 F 4/64, C 08 F 2/34

(54) **Process for producing an alpha-olefin polymer.**

(30) Priority: **31.08.79 JP 110184/79**

(43) Date of publication of application:
**11.03.81 Bulletin 81/10**

(45) Publication of the grant of the patent:
**06.06.84 Bulletin 84/23**

(84) Designated Contracting States:
**AT DE FR GB IT NL**

(56) References cited:
EP - A - 0 003 228
DE - A - 2 739 608
FR - A - 2 089 043
US - A - 4 012 573

(73) Proprietor: **MITSUI PETROCHEMICAL INDUSTRIES, LTD.**
**2-5, Kasumigaseki 3-chome Chiyoda-ku**
**Tokyo 100 (JP)**

(72) Inventor: **Kato, Akifumi**
**12-3, Shinmachi 2-chome**
**Ohtake-shi Hiroshima-ken (JP)**
Inventor: **Mineshima, Hideo**
**12-3, Shinmachi 2-chome**
**Ohtake-shi Hiroshima-ken (JP)**
Inventor: **Yamamoto, Ryoichi**
**9-11, Waki 4-chome Waki-cho**
**Kuga-gun Yamaguchi-ken (JP)**

(74) Representative: **Myerscough, Philip Boyd et al,**
**J.A.Kemp & Co. 14, South Square Gray's Inn**
**London, WC1R 5EU (GB)**

**EP 0 024 933 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to an improved process for producing an alpha-olefin polymer (to be sometimes used to include a copolymer of an alpha-olefin also), which comprises polymerizing (to be used to denote copolymerization also) an alpha-olefin or alpha-olefins in the presence of a catalyst composed of a solid titanium catalyst component and an organoaluminum catalyst component. More specifically, this invention relates to a gas-phase polymerization process which can afford an alpha-olefin polymer by an easy operation in a simple apparatus with a good reproducibility of quality, and which can be performed smoothly, efficiently and stably while avoiding various operational troubles.

In particular, the present invention provides a process for producing an alpha-olefin polymer or copolymer which comprises polymerizing or copolymerizing an alpha-olefin or alpha-olefins under gas-phase polymerization or copolymerization conditions in the presence of a catalyst composed of a solid titanium catalyst component and an organoaluminum compound; characterized in that said process is carried out under a set of the following parameters (A) to (E),

(A) said gas-phase polymerization or copolymerization is carried out in the presence of a catalyst composed of a solid halogen-containing titanium catalyst component supported on a magnesium compound and said organoaluminum compound, said catalyst having been pretreated by polymerizing or copolymerizing not more than about 200 g per gram of said solid titanium catalyst component, of an olefin or olefins in its presence,

(B) said gas-phase polymerization or copolymerization is carried out while maintaining the polymerization or copolymerization system in the fluidized state by mechanically stirring it and blowing said olefin in the gaseous state and/or a gaseous, easily volatile non-polymerizable hydrocarbon into it.

(C) said olefin in the liquid state and/or a liquid, easily volatile non-polymerizable hydrocarbon is introduced into the polymerization or copolymerization system and while gasifying said olefin and/or said hydrocarbon in said system, said gas-phase polymerization or copolymerization is carried out,

(D) the unreacted olefin gas and/or the easily volatile non-polymerizable hydrocarbon gas discharged from the polymerization or copolymerization system is partly or wholly liquefied and recycled as the liquid olefin and/or hydrocarbon in (C), and

(E) said olefin is blown or introduced into the polymerization or copolymerization system in at least one of (B) and (C).

Previously, a slurry polymerization method or a solution polymerization method using an olefin itself or an inert solvent as a reaction medium has been predominantly employed in the polymerization of olefins. These polymerization methods, however, require many post-treatment operations such as the separation of the resulting polymer from the reaction medium, the drying of the polymer, the recovery of the reaction medium, and the purification of the polymer.

In contrast, in a gas-phase polymerization method, these post-treatment operations could be omitted or simplified. However, it suffers from various troubles in polymerization operation, and it has been difficult to perform the gas-phase polymerization smoothly, efficiently and stably to give an olefin polymer with a good reproducibility of quality.

In gas-phase polymerization of olefins using an old-type Ziegler titanium catalyst component such as $TiCl_3$ (see US—A—4012573) $TiCl_3 . 1/3AlCl_3$ or $TiCl_4$, or an old-type titanium catalyst component supported on a carrier such as olefin polymer particles, silica particles, alumina particles, titanium oxide particles or calcium carbonate particles, the activity of the catalyst is insufficient, and the catalyst residue in the resulting polymer cannot be reduced to such an extent that makes it possible to omit the de-ashing operation. Hence, this gas-phase polymerization procedure has the trouble of requiring the deashing treatment, but it has been impossible to provide means capable of removing this trouble satisfactorily. Furthermore, the gas-phase polymerization operation is difficult to perform smoothly, efficiently and stably, and the quality reproducibility of the polymer is poor. Thus, despite a number of proposals made about the production of polyolefins by gas-phase polymerization, the slurry polymerization method and the solution polymerization method are still in widespread use today.

One prior suggestion is disclosed in Japanese Laid-Open Patent Publication No. 84184/73 (laid-open on November 9, 1973; corresponding to US—A—3,877,861). The gas-phase polymerization suggested in this Publication is characterized by the fact that propylene is first polymerized in a separate vessel in the presence of a transition metal catalyst component and an organometallic compound in an inert diluent, the amount of propylene being not more than 100 times, preferably not more than 50 times, the weight of the transition metal catalyst component, and then the resulting suspension containing the prepolymerization-treated catalyst composed of the transition metal catalyst component and the organometallic compound is fed into a gas-phase polymerization zone and the polymerization is continued. This Publication, however, fails to disclose the use of a solid halogen-containing titanium catalyst component supported on a magnesium compound, and only $TiCl_3 . 1/3AlCl_3$ is used in a working example. Furthermore, this prior Publication fails to give any description

about the use of mechanical stirring, the introduction of both a gaseous alpha-olefin and/or a gaseous, easily volatile non-polymerizable hydrocarbon and a liquid alpha-olefin and/or a liquid, easily volatile non-polymerizable hydrocarbon, and the re-use of the unreacted alpha-olefin gas and/or easily volatile non-polymerizable hydrocarbon gas discharged from the polymerization system as the liquid alpha-olefin and/or liquid, easily volatile non-polymerizable hydrocarbon.

Japanese Patent Publication No. 17487/67 (published on September 13, 1967; corresponding to British Patent No. 1,010,627) discloses a gas-phase polymerization process wherein the same suspension as described in the aforesaid prior Publication which contains a prepolymerization-treated catalyst is fed into a gas-phase polymerization zone and polymerized. This Patent Publication discloses that by feeding the suspension together with an inert liquid medium such as propane, butane, pentanes and hexanes, the gas-phase polymerization zone or bed is maintained in the fluidized stable by utilizing the abrupt gasification and expansion of the liquid medium. This Patent Publication neither discloses the use of a solid halogen-containing titanium catalyst component supported on a magnesium compound, and the transition metal catalyst component is limited to a trihalide of Ti and/or V. Moreover, this Patent Publication does not describe the re-use of the unreacted alpha-olefin gas and/or the gasified inert liquid medium as the liquid alpha-olefin and/or inert liquid medium.

Japanese Patent Publications Nos. 11489/72 (published on April 11, 1972; corresponding to U.S. Patent No. 3,639,377) and Japanese Patent Publication No. 7640/75 (published on March 27, 1975) disclose that a liquid alpha-olefin and a liquid inert medium are fed into the gas-phase polymerization system, and the inert liquid medium discharged is recycled for re-use. In this suggestion, too, only the use of $TiCl_3 . 1/3AlCl_3$ component is disclosed, and no description is made as to the use of a solid halogen-containing titanium catalyst component supported on a magnesium compound.

Japanese Patent Publications Nos. 14862/74 (published on April 10, 1974) and 30539/77 (published on August 9, 1977) also disclose other proposals for gas-phase polymerization of alpha-olefins.

All of these prior suggestions require a deashing treatment, and cannot provide satisfactory means for removing the various troubles associated with the performance of gas-phase polymerization such as the difficulty of performing gas-phase polymerization smoothly, efficiently and stably and the poor reproducibility of quality. Accordingly, the slurry polymerization and solution-polymerization method still occupy a predominant position in this technical field.

On the other hand, the solid halogen-containing titanium catalyst component supported on a magnesium compound is known. The behaviour of this catalyst component in gas-phase polymerization in the present invention has been unknown and not been elucidated. Accordingly, technical problems in the utilization of this catalyst component in such gas-phase polymerization have not been known, and of course, no means for solving such problems has been suggested.

The present inventors made investigations about the method of gas-phase polymerization of olefin using a highly active titanium catalyst component in order to provide an improved process which can make best of the advantages of the gas-phase olefin polymerization process and overcome its disadvantages.

As a result, they know that more technical problems must be solved in order to obtain a polymer of high quality by polymerizing olefins in the gaseous phase using a highly active titanium catalyst component continuously over a long period of time.

Investigations of the present inventors have shown that troubles, such as the difficulty of forming a uniform mixture of polymer particles in a gas-phase polymerization bed, blocking of polymer particles, powderization of the polymer particles by friction between them incident to forced agitation, the adhesion of the polymer to the reactor wall, entrainment of the catalyst components or the resulting polymer, and the need for removal of heat, increase. It has been found that gas-phase polymerization of olefins utilizing a highly active titanium catalyst component cannot be virtually performed smoothly, efficiently and stably unless these increased troubles are removed, and the process cannot be operated for a long period of time or a polymer of high quality cannot be obtained with a good reproducibility of its quality.

The present inventors continued their investigations in order to solve the aforesaid technical problems and to provide an improved process which can afford an olefin polymer of high quality with a good reproducibility of its quality by performing gas-phase polymerization of an olefin smoothly, efficiently and stably utilizing a highly active titanium catalyst component.

As a result, they have found that such an improved process can be advantageously and easily achieved by using a solid halogen-containing titanium catalyst component as the highly active catalyst component and performing gas-phase polymerization of an alpha-olefin under a set of parameters (A) to (E) described herein above.

It is an object of this invention therefore to provide an improved process for polymerizating or copolymerizing olefins in the gaseous phase.

The above and other objects and advantages of this invention will become apparent from the following description.

The catalyst used in this invention is a highly active catalyst composed of a solid titanium catalyst component supported on a magnesium, and an organoaluminum compound. Under the polymerization conditions employed, this catalyst is capable of forming an olefin polymer in an amount of at least 100,000 parts by weight, preferably at least 150,000 parts by weight, more preferably at least 200,000 parts by weight, per part by weight of titanium in the titanium catalyst component.

The highly active titanium catalyst component itself supported on a magnesium compound is widely known. The titanium catalyst component contains magnesium, titanium and halogen as essential ingredients, and optionally contains another metal or element, a functional group and an electron donor. Usually, it contains amorphous magnesium halide, and the catalyst has a specific surface area of at least 3 $m^2/g$, especially at least 10 $m^2/g$, in many cases at least 50 $m^2/g$.

When no electron donor is contained, the solid titanium catalyst component preferably contains about 0.5 to about 15% by weight especially about 1 to about 10% by weight, of titanium, and the titanium/magnesium atomic ratio is preferably from about 1/2 to about 1/100, especially from about 1/3 to about 1/50, and the halogen/titanium mole ratio is preferably from about 4 to about 200, especially from about 6 to about 100. When the solid titanium catalyst component contains an electron donor, it preferably contains about 0.4 to about 12% by weight, especially from about 0.6 to about 10% by weight, of titanium, and the titanium/magnesium atomic ratio is preferably from about 1/2 to about 1/100, especially from about 1/4 to about 1/70, and the halogen/titanium atomic ratio is preferably from about 5 to about 200, especially from about 6 to about 100, and the electron donor/titanium mole ratio is preferably from about 0.1 to about 7, especially from about 0.2 to about 6.

Examples of the magnesium compound which can be used in the synthesis of the highly active titanium catalyst component include magnesium halides, alkoxymagnesiums, aryloxymagnesiums, magnesium alkoxyhalides, magnesium aryloxyhalides, magnesium oxide, magnesium hydroxide, magnesium carbonate, hydrotalcite, hydrotalcite analogs, magnesium carboxylates, and Grignard compounds. Metallic magnesium may sometimes be used. There is no particular restriction on the method of preparing these magnesium compounds. In the above exemplification, examples of the alkoxy group are $C_1$ to $C_8$ alkoxy groups, and examples of the aryloxy groups are a phenoxy group and a phenoxy group having a $C_1$ to $C_8$ alkyl group substituent.

Examples of suitable titanium compounds which can be utilized in synthesizing the highly active titanium catalyst component are titanium tetrahalides, titanium alkoxyhalides, titanium aryloxyhalides, titanium alkoxides, titanium aryloxides and titanium trihalides. Of these, the titanium tetrahalides are most suitable. Examples of the alkoxy group in the above exemplification are $C_1$ to $C_8$ alkoxy groups, and examples of the aryloxy group are a phenoxy group and a phenoxy group having a $C_1$ to $C_8$ alkyl group substituent.

At least one of the magnesium compound and the titanium compound is preferably a compound containing halogen. When both the magnesium compound and the titanium compound do not contain halogen, it is necessary to use a known halogenating agent. Examples of the halogenating agent include halogens in the elemental state such as $Cl_2$ and $Br_2$, hydrogen halides such as HCl, HBr, and HI, halomethanes such as $CCl_3H$ and $CCl_4$, oxyhalides of non-metals such as $SO_2Cl_2$, $SOCl_2$, NOCl, $COCl_2$ and $POCl_3$, halides of non-metals such as $PCl_3$ and $PCl_5$, and halides of metals and ammonium such as $AlCl_3$, $NH_4Cl$, $SiCl_4$ and $SnCl_4$.

The solid halogen-containing titanium catalyst component supported on a magnesium compound can be produced by methods known per se, for example by a method comprising directly contacting the above-exemplified magnesium compound and titanium compound; and a method comprising contacting the magnesium compound in a desired sequence with one or more of an electron donor, a halogenating agent, an organometallic compound, a silicon compound, and then contacting the resulting product with the titanium compound. The mode of contacting may, for example, be mere mixing, contacting involving mechanical pulverization, contacting in the absence of mechanical pulverization or contacting in the presence of an inert diluent. These modes of contacting are widely known, and can be utilized in forming the solid titanium catalyst component for use in this invention.

Examples of the electron donor which can be used in preparing the highly active catalyst component include oxygen-containing electron donors such as water, alcohols, phenols, ketones, aldehydes, carboxylic acids, esters, ethers, acid amides and acid anhydrides and nitrogen-containing electron donors such as ammonia, amines, nitriles and isocyanates. Specific examples of the electron donors are alcohols having 1 to 18 carbon atoms such as methanol, ethanol, propanol, pentanol, hexanol, octanol, dodecanol, octadecyl alcohol, benzyl alcohol, phenylethyl alcohol, cumyl alcohol and isopropylbenzyl alcohol; phenols having 6 to 15 carbon atoms and optionally containing a lower alkyl group, such as phenol, cresol, xylenol, ethylphenol, propylphenol, cumylphenol, and naphthol; ketones having 3 to 15 carbon atoms such as acetone, methyl ethyl ketone, methyl isobutyl ketone, acetophenone and benzophenone; aldehydes having 2 to 15 carbon atoms such as acetaldehyde, propionaldehyde, octylaldehyde, benzaldehyde, tolualdehyde and

naphthaldehyde; organic acid esters having 2 to 18 carbon atoms such as methyl formate, methyl acetate, ethyl acetate, vinyl acetate, propyl acetate, octyl acetate, cyclohexyl acetate, ethyl propionate, methyl butyrate, ethyl valerate, methyl chloroacetate, ethyl dichloroacetate, methyl methacrylate, ethyl crotonate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, methyl toluate, ethyl toluate, amyl toluate, ethyl ethylbenzoate, methyl anisate, ethyl anisate, ethyl ethoxybenzoate, gamma-butyrolactone, delta-valerolactone, coumarine, phthalide and ethylene carbonate; acid halides having 2 to 15 carbon atoms such as acetyl chloride, benzyl chloride, toluoyl chloride and anisoyl chloride; ethers having 2 to 20 carbon atoms such as methyl ether, ethyl ether, isopropyl ether, butyl ether, amyl ether, tetrahydrofuran, anisol, and diphenyl ether; acid amides such as benzamide and toluamide; amines such as methylamine, ethylamine, diethylamine, tributylamine, piperidine, tribenzylamine, aniline, pyridine, picoline and tetramethylethylenediamine; and nitriles such as acetonitrile, benzonitrile and tolunitrile. Those electron donors which have no active hydrogen are preferred for inclusion in the highly active titanium catalyst component. In the highly stereospecific polymerization of alpha-olefins having at least 3 carbon atoms, organic acid esters, above all aromatic carboxylic acid esters, are preferred.

As the organoaluminum compound to be combined with the solid halogen-containing titanium catalyst component supported on a magnesium compound in the process of this invention, organic compounds having at least one Al-C bond in the molecule can be used. Examples are given in (i) to (iii) below.

(i) Organoaluminum compounds of the following general formula

$$R^1_mAl(OR^2)_nH_pX_q$$

where $R^1$ and $R^2$ are identical or different and represent a hydrocarbon group usually containing 1 to 15, preferably 1 to 4, carbon atoms; X represents a halogen atom; and m is a number represented by $0<m\leqq3$, n is a number represented by $0\leqq n<3$, p is a number represented by $0\leqq p<3$ and q is a number represented by $0\leqq q<3$, provided that m+n+p+q is 3.

(ii) Complex alkylated products of metals of Group I and aluminum which are represented by the general formula

$$M^1AlR^1_4$$

wherein $M^1$ represents Li, Na or K, and $R^1$ is as defined above.

(iii) Complex compounds of aluminum and magnesium.

In the above formulae, examples of the hydrocarbon group for $R^1$ and $R^2$ are alkyl groups and a phenyl group optionally substituted by a lower alkyl group.

Examples of the organoaluminum compounds (i) include compounds of the general formula $R^1_mAl(OR^2)_{3-m}$ wherein $R^1$ and $R^2$ are as defined hereinabove, and m is preferably a number represented by $1.5\leqq m\leqq3$; compounds of the general formula $R^1_mAlX_{3-m}$ wherein $R^1$ is as defined above, X is halogen and m is preferably a number represented by $0<m<3$; compounds of the general formula $R^1_mAlH_{3-m}$ wherein $R^1$ is as defined above, and m is a number represented by $2\leqq m<3$; and compounds of the general formula $R^1_mAl(OR^2)_nX_q$ wherein $R^1$ and $R^2$ are as defined hereinabove, X is halogen, m is a number represented by $0<m\leqq3$, n is a number represented by $0\leqq n<3$ and q is a number represented by $0\leqq q<3$ provided that m+n+q equals 3.

Specific examples of the aluminum compounds (i) are trialkyl aluminums such as triethyl aluminum and tributyl aluminum; trialkenyl aluminums such as triisoprenyl aluminum; dialkylaluminum alkoxides such as diethylaluminum ethoxide and dibutylaluminum butoxide; alkylaluminum sesquialkoxides such as ethylaluminum sesquiethoxide and butylaluminum sesquibutoxide; partially alkoxylated alkylaluminums of the general formula

$$R^1_{2.5}Al(OR^2)_{0.5;}$$

dialkylaluminum halides such as diethylaluminum chloride, dibutylaluminum chloride and diethylaluminum bromide; alkylaluminum sesquihalides such as ethylaluminum sesquichloride, butylaluminum sesquichloride and ethylaluminum sesquibromide; partially halogenated alkyl aluminums, for example alkyl aluminum dihalides such as ethylaluminum dichloride; propylaluminum dichloride and butylaluminum dibromide; dialkyl aluminum hydrides such as diethylaluminum hydride and dibutylaluminum hydride; partially hydrogenated alkyl aluminums, for example alkylaluminum dihydrides such as ethylaluminum dihydride and propylaluminum dihydride; and partially alkoxylated and halogenated alkyl aluminums such as ethylaluminum ethoxychloride, butylaluminum butoxychloride and ethylaluminum ethoxybromide. Organoaluminum compounds having two or more aluminum atoms bonded to each other through an oxygen or nitrogen atom may also be used as the compounds (i). Examples of such compounds are

$$(C_2H_5)_2AlOAl(C_2H_5)_2,$$

$$(C_4H_9)_2AlOAl(C_4H_9)_2$$

and

$$(C_2H_5)_2Al\underset{\displaystyle C_6H_5}{\underset{|}{N}}Al(C_2H_5)_2.$$

Examples of the compounds (ii) are

$LiAl(C_2H_5)_4$,

$LiAl(C_6H_{13})_4$

and

$LiAl(C_7H_{15})_4$.

Of the above exemplified organoaluminum compounds, trialkylaluminums and/or alkylaluminum halides are preferred.

In the gas-phase polymerization in accordance with this invention, various additives including hydrogen, electron donors and organic halides may be used in order to control molecular weight, molecular weight distribution or stereospecificity. For improvement of stereospecificity, organic acid esters, above all aromatic carboxylic acid esters, are suitable.

The olefin used in the polymerization process of this invention is at least one alpha-olefin having 2 to 10 carbon atoms, such as ethylene, propylene, 1-butene, 1-pentene, 1-hexene, 4-methyl-1-pentene, 1-octene, and 1-decene. The process of this invention is especially suitable for production of a highly crystalline polymer comprising a major proportion (for example, at least 90 mole%) of units derived from ethylene or propylene.

The solid halogen-containing catalyst component used in the gas-phase polymerization of this invention is prepolymerization-treated with an olefin as specified in requirement (A). The prepolymerization treatment is carried out by polymerizing a small amount of an olefin using the solid halogen-containing titanium catalyst component supported on a magnesium compound and an organoaluminum catalyst component. Preferably, the prepolymerization is carried out in the liquid phase. An olefin itself or an inert solvent may be used as a reaction medium in the prepolymerization treatment. The prepolymerization treatment, if desired, may be carried out in the presence of hydrogen or an electron donor as in the main polymerization step. The olefin used in the prepolymerization treatment needs not to be the same as an olefin to be polymerized in the main polymerization step. Generally, however, these olefins are the same. Examples of the inert solvent that can be used in the prepolymerization treatment include aliphatic hydrocarbons such as propane, butane, n-pentane, isopentane, n-hexane, iso-hexane, n-heptane, n-octane, iso-octane, n-dodecane and kerosene; alicyclic hydrocarbons such as cyclopentane, methylcyclopentane, cyclohexane and methylcyclohexane; aromatic hydrocarbons such as benzene, toluene and xylene; and halogenated hydrocarbons such as methylene chloride, ethylene chloride and chlorobenzene. Of these, the aliphatic hydrocarbons, especially those having 3 to 6 carbon atoms, are preferred.

In the prepolymerization treatment, the solid titanium catalyst component is used in an amount of generally about 0.001 to about 500 millimoles, preferably about 0.005 to about 200 millimoles, calculated as titanium atom, per liter of the liquid phase. Preferably, the organoaluminum compound is used in such a proportion that the Al/Ti atomic ratio becomes from about 0.1 to about 1000, especially from about 0.5 to about 500. The temperature of the prepolymerization treatment is preferably about —30°C to about 90°C. This temperature can be varied depending upon the type of the olefin to be pre-polymerized. For example, it is about —30 to about 90°C, especially from about 0 to about 70°C, for ethylene; from about —30 to about 80°C, especially from about 0 to about 50°C, for propylene; from about —30 to about 40°C, especially from about 0 to about 30°C; for 1-butene; and from about —30 to about 80°C, especially from about 0 to about 50°C, for methylpentene.

The amount of the olefin to be prepolymerized may be very small to obtain the required effect. For example, it may be not more than about 200 g, for example about 0.01 to about 200 g, especially from about 0.1 to about 100 g, per gram of the solid titanium catalyst component, and is preferably adjusted to not more than about 10% by weight, especially not more than about 5% by weight, of the total amount polymerized.

In the process of this invention, an alpha-olefin is polymerized in the gaseous phase in the presence of a catalyst meeting the aforesaid requirement (A) in the presence or absence of an easily volatile non-polymerizable hydrocarbon. The gas-phase polymerization can be performed, for example, at a temperature of about 30° to about 130°C and a pressure of about 1 to about 100 kg/cm² (98 kPa to 9.8 MPa).

The easily volatile non-polymerizable hydrocarbon as used herein denotes a hydrocarbon which can be easily gasified under the alpha-olefin gas-phase polymerization conditions and does not polymerize under these polymerization conditions. Preferably, these hydrocarbons are liquefiable at low temperatures and pressures. Typical examples of the hydrocarbons that can be used for this purpose are those having 3 to 6, preferably 3 to 5, carbon atoms such as propane, butane, pentane and cyclopentane. Such as easily volatile non-polymerizable hydrocarbon is used mainly for the purpose of removing the heat of polymerization.

Furthermore, as specified in the aforesaid requirement (B), the process of this invention is carried out while maintaining the reaction system containing the alpha-olefin polymer particles formed in the aforesaid prepolymerization treatment and the catalyst subjected to the prepolymerization treatment in the fluidized state by mechanically stirring the reaction system and blowing a gaseous alpha-olefin and/or a gaseous, easily volatile non-polymerizable hydrocarbon into the system.

The mechanical stirring can be performed by using various types of stirrer such as an anchor-type stirrer, a screw-type stirring and a ribbon-type stirrer. The gaseous olefin and/or the gaseous, easily volatile non-polymerizable hydrocarbon are blown into the reaction system from the bottom of the reaction zone or bed. For example, it is conveniently performed through an air-permeable partition for forming a fluidized bed, such as a porous plate, in order to disperse these gases uniformly throughout the reaction zone or bed. The flow rate of the gas is preferably maintained at a suitable value in order to facilitate fluidization of the reaction bed, reduce the load of the mechanical stirring and prevent entrainment. Let the minimum speed of fluidization be $U_{mf}$, then the flow rate of the gas is maintained at about 0.1 $U_{mf}$ to about 10 $U_{mf}$, preferably at about 0.5 $U_{mf}$ to about 3 $U_{mf}$.

The titanium catalyst component subjected to the prepolymerization treatment can be fed into the reaction bed or into its top portion. In the gas-phase polymerization, the titanium catalyst component is used in an amount of generally about 0.0005 to about 1 millimole, preferably about 0.001 to about 0.5 millimoles, calculated as titanium atom, per liter of the volume of the reaction zone or bed, and the organoaluminum compound is used in an Al/Ti atomic ratio of generally from about 1 to about 2000, preferably from about 10 to about 500.

In addition to the catalyst components subjected to the prepolymerization treatment, a fresh supply of the organoaluminum compound and optionally additives such as an electron donor may be additionally supplied. The catalyst components may be fed as suspended in an inert solvent or olefin. Hydrogen that can be used to control molecular weight may be fed through any desired part of the polymerization vessel.

In the process of this invention, as specified in the requirement (C) described hereinabove, a liquid olefin and/or a liquid, easily volatile non-polymerizable hydrocarbon is introduced into the reaction system and gasified. Upon gasification, these liquids absorb the heat of polymerization in the polymerization vessel.

Furthermore, as specified in the aforesaid requirement (D), the unreacted olefin gas and/or the easily volatile non-polymerizable hydrocarbon gas discharged from the reaction system is partly or wholly liquefied, for example in a condenser, and recycled for use as the liquid olefin and/or hydrocarbon in (C). The polymerization temperature is controlled mainly by the amount of the recycle.

The olefin to be polymerized is fed as in (B) and/or (C). As shown in the requirement (E), the olefin is blown or introduced into the polymerization system in at least one of (B) and (C).

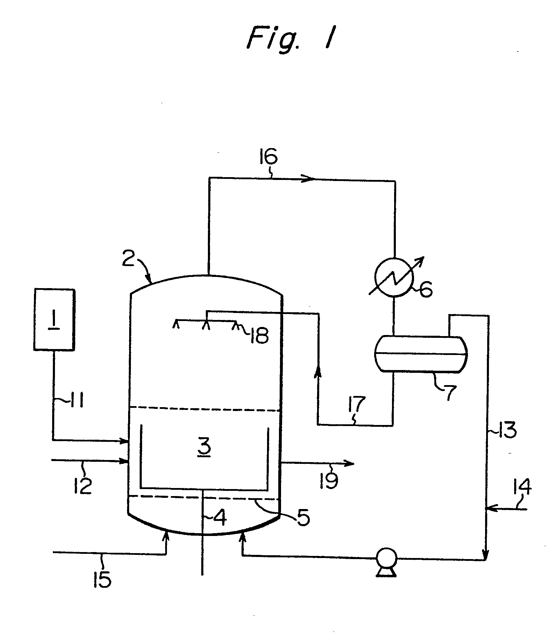

One embodiment of the process of this invention is shown in Figure 1. An olefin is prepolymerized in a prepolymerization tank 1 in the presence of a solid halogen-containing titanium catalyst component supported on a magnesium compound and an organoaluminum compound. The product of the pre-polymerization is continuously fed into a reaction bed or zone 3 of a gas-phase polymerization tank through a pipe 11. An additional supply of the organoaluminum compound is fed to the reaction zone or bed 3 of the tank 2 through a pipe 12. The reaction zone or bed 3 of the gas-phase polymerization tank 2 is stirred by a stirrer 4. A gaseous olefin remaining uncondensed at a condenser 6, or a fresh supply of olefin, is fed to the bottom of the polymerization tank through a pipe 13 or a pipe 14. The gaseous olefin reaches the reaction bed through a porous plate 5 to fluidize the reaction bed, and is also used in the polymerization. Hydrogen for molecular weight control is fed into the polymerization tank through a pipe 15. The unreacted olefin gas discharged from the polymerization tank is condensed at the condenser 6 via a pipe 16, conveyed to a drum 7, and passed through a pipe 17, and finally sprayed onto the reaction bed from a spray section 18. The resulting polymer is continuously or intermittently withdrawn from a pipe 19 so that the height of the reaction bed is maintained constant.

The mechanical stirring of the reaction bed is essential in uniformly dispersing the high temperature active catalyst and the liquid olefin or the liquid, easily volatile non-polymerizable hydrocarbon in the reaction bed. By this operation alone, the rate of mixing is slow, and the required stirring power is extremely high. Futhermore, friction occurs vigorously between particles or between particles and the wall surface to cause pulverization of the particles.

These defects can be markedly remedied by using the mechanical stirring in combination with the fluidization of the reaction bed by blowing a gaseous olefin and/or a gaseous, easily volatile non-polymerizable hydrocarbon [requirement (B)]. As a result of gas blowing, the speed of mixing of the highly active catalyst and the liquid olefin or easily volatile non-polymerizable hydrocarbon in particles can be increased to about 1.5 to about 2 times and the power required for the mechanical stirring can be decreased to about 1/2 to about 1/10, thus making it possible to perform the polymerization reaction very smoothly. On the other hand, fluidization of the reaction bed by blowing the gaseous olefin or the gaseous, easily volatile non-polymerizable hydrocarbon results in powder entrainment to an unnegligible degree, and therefore, much care is required regarding the particle size, particle size distribution and shape of the powder. In accordance with this invention, the polymer forming the reaction bed has a narrow particle size distribution and an increased particle diameter by using a titanium catalyst component supported on a magnesium compound which has been subjected to pre-polymerization treatment with an olefin.

Consequently, entrainment of the titanium catalyst component or polymer is drastically reduced.

Since the catalyst used in this invention is highly active, its adhesion to the reactor wall or pipings is vigorous. Hence, care must be exercised in the entrainment of the titanium catalyst component or the polymer. By subjecting the titanium catalyst component to the prepolymerization treatment, the entrainment is drastically reduced, and adhesion of the catalyst to the reactor wall, pipings, etc. and the consequent clogging are obviated. Furthermore, it has been unexpectedly found that the resulting polymer has an increased bulk density and its state of fluidization is further improved, and that localized polymerization is easy to avoid and after the polymerization, the polymer lends itself to easy handling.

Moreover, uniform polymerization can be performed because the polymerization temperature can be controlled by introducing the liquid olefin or the liquid, easily volatile non-polymerizable hydrocarbon into the reaction system and gasifying it in the reaction bed having a good state of mixing.

Nitrogen gas stream may be passed through the polymer powder discharged from the polymerization tank in order to remove the olefin, etc. contained in the powder. If desired, it may be pelletized by an extruder. A small amount of water, an alcohol, etc. may be added at this time in order to deactivate the catalyst completely. A stabilizer, an antioxidant, etc. may also be incorporated.

The following Examples illustrate the process of this invention more specifically.

Example 1

Preparation of a titanium catalyst component:—

Commercially available anhydrous magnesium chloride (30 g), 7.5 ml of ethyl benzoate and 4.5 ml of methylpolysiloxane (viscosity 20 c.s. ($2\times10^{-5}$ $m^2/s$) at 25°C) were contacted for 40 hours in a vibratory ball mill in an atmosphere of nitrogen. Twenty grams of the resulting solid product was suspended in 200 ml of $TiCl_4$, and contacted with it at 80°C for 2 hours with stirring. After the reaction, the reaction mixture was decanted, and the supernatant liquid was washed with purified hexane. This operation was repeated until no chlorine was detected in the hexane used in washing the supernatant liquid. The resulting titanium catalyst component contained 1.9% by weight of titanium and 65% by weight of chlorine calculated as atoms.

The above operation was repeated several time, and the product was used in the following polymerization.

Prepolymerization treatment:—

Propylene (in an amount twice the weight of the titanium catalyst component) was polymerized in hexane in the presence of 1.5 mmoles/liter of the titanium catalyst component, 6 mmoles/liter of triethyl aluminum (TEA for short), and 2 mmoles/liter of methyl p-toluene (MPT for short).

Gas-phase polymerization of propylene:—

Propylene was polymerized by using the catalyst subjected to the prepolymerization treatment in accordance with the flow diagram shown in Figure 1. The reaction conditions were: temperature 70°C, pressure 18 $kg/cm^2$ . G (18 MPa Gauge), and the reaction volume 30 liters. The feed rate of the titanium catalyst component subjected to the prepolymerization treatment was 1 mmole/hour, and TEA and MPT were fed at a rate of 50 mmoles/hour and 12 mmoles/hour, respectively. The resulting polymer was continuously taken out at a rate of 10 kg/hour.

An ordinary anchor-type stirrer rotating at a speed of 200 rpm was used. The liquid propylene recycled was sprayed from the top of the reactor, and the amount of the liquid propylene recycle was 45 kg/hour. The total amount of the feed propylene and the recycle gas was controlled so that a linear velocity of 4 cm/sec was maintained in the reactor. As a result, a polymer having a melt index of 0.05 and an n-heptane-insoluble content of 98% by weight could be formed stably over a long period of time.

Table 1 shows the superiority of a set of the three parameters, i.e. the prepolymerization treatment, the mechanical stirring, and the gas feeding, in accordance with this invention. Specifically, when the prepolymerization treatment is combined with the mechanical stirring, the polymer has a high bulk density and the fluidization of the polymer powder can be greatly improved. Furthermore, the polymer has an increased average particle diameter, and the operating condition of the gas-phase polymerization is very stable. Furthermore, by combining these parameters with the blowing of gases, the gas-phase polymerization process in accordance with this invention can be operated stably over long periods of time.

TABLE 1
Comparison according to a combination of the three parameters

| Prepolymerization treatment | Mechanical stirring | Gas feeding | Resulting powder | | State of operation |
|---|---|---|---|---|---|
| | | | Average particle diameter $\mu m$ | Bulk density (g/cc) | |
| Yes | No | Yes | 250 | 0.45 | The polymerization temperature varied drastically, and in 24 hours, a large mass formed in the reactor, making it impossible to continue the operation. |
| No | Yes | Yes | 180 | 0.35 | Entrainment of the catalyst occurred frequently. A mass formed in the gaseous phase of the reactor and then fell into the reactor. In 50 hours, the operation failed. |
| Yes | Yes | No | 220 | 0.43 | In 50 hours, a mass began to form on the reactor wall around the polymerization interface, and grew to a large mass in 150 hours, thus, making it impossible to continue the operation. The power required for stirring was as high as 70 KW/ton. |
| Yes | Yes | Yes | 240 | 0.47 | The operation could be continued for 500 hours without any particular problem. The power required for stirring was 10 KW/ton. |

Example 2

The product synthesized in the prepolymerization in Example 1 was fully dried at room temperature to remove hexane, and then stored in propylene in a Ti concentration of 0.5 mmole/liter. It was further subjected to prepolymerization by a continuous method. The continuous prepolymerization conditions were: temperature 50°C, pressure 25 kg/cm² (2.5 MPa), $AlEt_3$/MPT=2.0, and $AlEt_3$/Ti=10. The quantitative ratio of propylene to the titanium catalyst component was 100:1.

Subsequently, polymerization was performed in accordance with the flow shown in Figure 1. The amount of the catalyst component subjected to prepolymerization was 0.7 mmole/hour, and TEA and MPT were fed at a rate of 50 mmoles/hour and 10 mmoles/hour, respectively. The polymerization was performed at a temperature of 75°C and a pressure of 25 kg/cm² (2.5 MPa) while maintaining the concentration of $H_2$ at 3 mole%. The amount of the recycle propylene sprayed from the top portion was 41 kg/hour. The total amount of the feed propylene and the recycle gas was controlled so as to maintain a linear speed of 5 cm/sec in the reactor.

A polymer having a melt index of 10.5 and an n-heptane-insoluble content of 94.5% by weight was formed at a rate of 9.2 kg/hour.

Example 3

Ethylene was polymerized using the prepolymerization mixture synthesized in Example 1. The catalyst component subjected to the prepolymerization treatment was stored in hexane in a Ti concentration of 3 mmoles/liter, and the polymerization was performed in accordance with the flow shown in Figure 1. The amount of the catalyst component subjected to the prepolymerization treatment was 0.3 mmole/hour, and TEA was also fed at a rate of 6 mmoles/hour. The polymerization was carried out at a temperature of 80°C and a pressure of 15 kg/cm² (1.5 MPa) while maintaining the concentration of $H_2$ at 30 mole%. As a medium for removing the heat of polymerization, fully purified n-butane was used. The amount of the recycle n-butane was 100 kg/hour. The total amount (ethylene content 50 mole%) of the feed ethylene and the recycle gas was controlled so as to maintain a linear speed of 10 cm/sec in the reactor.

A polymer having a melt index of 4, a density of 0.964 and an average particle diameter of 350 $\mu$m was formed continuously at a rate of 11.5 kg/hour.

**Claims**

1. A process for producing an alpha-olefin polymer which comprises polymerizing at least one alpha-olefin of 2 to 10 carbon atoms in the gaseous phase in the presence of a catalyst composed of a solid titanium catalyst component and an organoaluminum compound, characterised in that the process is carried out under the following set of parameters (A) to (E):—

(A) the catalyst is composed of a solid halogen-containing titanium catalyst component supported on a magnesium compound and said organoaluminum compound, said catalyst having been pre-treated by polymerizing in its presence not more than 200 grams, per gram of said solid titanium catalyst component, of at least one olefin;

(B) the polymerization system is maintained in the fluidized state by mechanically stirring it and blowing into it said olefin in the gaseous state and/or gaseous, easily volatile non-polymerizable hydrocarbon;

(C) said olefin in the liquid state and/or a liquid, easily volatile non-polymerizable hydrocarbon is introduced into the polymerization system and the polymerization is carried out while gasifying said olefin and/or said hydrocarbon in said system;

(D) unreacted olefin gas and/or easily volatile non-polymerizable hydrocarbon gas discharged from the polymerization system is partly or wholly liquefied and recycled as liquid olefin and/or hydrocarbon in (C); and

(E) said olefin is blown or introduced into the polymerization system in at least one of (B) and (C).

2. A process according to claim 1 characterised in that in said solid halogen-containing titanium catalyst component supported on a magnesium compound, the Ti/Mg atomic ratio is from 1:2 to 1:100, and the halogen/Ti mole ratio is from 4:1 to 200:1.

3. A process according to claim 1 or 2 characterised in that said solid halogen-containing titanium catalyst component supported on a magnesium compound further contains an electron donor, and the mole ratio of the electron donor to the titanium atom is from 0.1:1 to 7:1, and the mole ratio of the halogen to the titanium atom is from 5:1 to 200:1.

4. A process according to any one of the preceeding claims characterised in that said prepolymerization treatment in (A) is carried out at a temperature of —30°C to 90°C.

5. A process according to any one of the preceding claims characterised in that said prepolymerization treatment in (A) is carried out by polymerizing the olefin in an amount of not more than 100 g per gram of the solid titanium catalyst component.

6. A process according to any one of the preceding claims characterised in that said easily volatile non-polymerizable hydrocarbon in (B), (C) and (D) is an aliphatic hydrocarbon having 3 to 6 carbon atoms.

7. A process according to any one of the preceding claims characterised in that the amount of the solid halogen-containing titanium catalyst component supported on a magnesium compound subjected to the pre-

polymerization treatment in (A) is 0.0005 to 1 millimole, calculated as titanium atom, per liter of the volume of the gas-phase polymerization reaction system.

8. A process according to any one of the preceding claims characterised in that the amount of said organoaluminum compound per liter of the volume of the gas-phase polymerization reaction system is such that the Al/Ti atomic ratio is from 1:1 to 2000:1.

9. A process according to any one of the preceding claims characterised in that the polymerization is carried out at a temperature of 30 to 130°C and a pressure of 98 to 9800 kPa (1 to 100 kg/$cm^2$).

**Patentansprüche**

1. Verfahren zur Herstellung eines $\alpha$-Olefinpolymers, umfassend die Polymerisation zumindest eines $\alpha$-Olefins mit 2 bis 10 Kohlenstoffatomen in der Gasphase in Gegenwart eines Katalysators, bestehend aus einer festen Titankatalysatorkomponente und einer Organoaluminiumverbindung, dadurch gekennzeichnet, daß das Verfahren unter den folgenden Parametern A bis E durchgeführt wird:—

A) der Katalysator ist zusammengesetzt aus einer festen halogenhaltigen Titankatalysatorkomponente auf einer Magnesiumverbindung als Träger und der Organoaluminiumverbindung, wobei der Katalyator vorbehandelt worden ist durch Polymerisieren in seiner Gegenwart von nicht mehr als 200 g/g der festen Titankatalysatorkomponente zumindest eines Olefins;
B) das Polymerisationssystem wird durch mechanisches Rühren und Einblasen des Olefins im Gaszustand und/oder eines gasförmigen leicht flüchtigen nicht polymerisierbaren Kohlenwasserstoffs im fluidisierten Zustand (Fluidadbett) gehalten;
C) das Olefin in flüssigem Zustand und/oder ein flüssiger leicht flüchtiger nicht polymerisierbarer Kohlenwasserstoff wird in das Polymerisationssystem eingeleitet und die Polymerisation durchgeführt, während das Olefin und/oder der Kohlenwasserstoff in dem System verdampft;
D) aus dem Polymerisationssystem austretendes nicht um gesetztes Olefingas und/oder Gas von leicht flüchtigem nicht polymerisierbarem Kohlenwasserstoff wird teilweise oder ganz verflüssigt und als flüssiges Olefin und/oder flüssiger Kohlenwasserstoff in (C) zurückgeführt und
E) das Olefin wird an zumindest einer der Stellen (B) und (C) in das Polymerisationssystem eingeblasen oder eingeführt.

2. Verfahren nach Anspruch 1, dadurch gekennzeichnet, daß bei der festen halogenhaltigen Titankatalysatorkomponente auf einer Magnesiumverbindung das Atomverhältnis Ti:Mg 1:2 bis 1:100 und das Molverhältnis Halogen:Ti 4:1 bis 200:1 beträgt.

3. Verfahren nach Anspruch 1 oder 2, dadurch gekennzeichnet, daß die feste halogenhaltige Titankatalysatorkomponente auf einer Magnesiumverbindung zusätzlich einen Elektronendonor enthält und das Molverhältnis des Elektronendonors zu Titanatom 1,0:1 bis 7:1 und das Molverhältnis Halogen zu Titanatom 5:1 bis 200:1 beträgt.

4. Verfahren nach einem der vorangehenden Ansprüche, dadurch gekennzeichnet, daß die Prepolymerisationsbehandlung in (A) bei einer Temperatur von —30 bis 90°C durchgeführt wird.

5. Verfahren nach einem der vorangehenden Ansprüche, dadurch gekennzeichnet, daß die Prepolymerisationsbehandlung in (A) durchgeführt wird durch Polymerisieren des Olefins in einer Menge von nicht mehr als 100 g/g feste Titankatalysatorkomponente.

6. Verfahren nach einem der vorangehenden Ansprüche, dadurch gekennzeichnet, daß der leicht flüchtige nicht-polymerisierbare Kohlenwasserstoff in (B) (C) und (D) ein aliphatischer Kohlenwasserstoff mit 3 bis 6 Kohlenstoffatomen ist.

7. Verfahren nach einem der vorangehenden Ansprüche, dadurch gekennzeichnet, daß die Menge der festen halogenhaltigen Titankatalysatorkomponente auf einer Magnesiumverbindung, die der Prepolymerisationsbehandlung in (A) unterworfen wird 0,0005 bis 1 mmol, berechnet als Titanatom, pro Liter des Volumens des Polymerisations-Reaktions-Systems in der Gasphase beträgt.

8. Verfahren nach einem der vorangehenden Ansprüche, dadurch gekennzeichnet, daß die Menge der Organoaluminiumverbindung pro Liter Volumen des Polymerisations-Reaktions-Systems in der Gasphase so gewählt wird, daß das Atomverhältnis Al:Ti 1:1 bis 2000:1 beträgt.

9. Verfahren nach einem der vorangehenden Ansprüche, dadurch gekennzeichnet, daß die Polymerisation bei einer Temperatur von 30 bis 130°C und bei einem Druck von 98 bis 9800 kPa (1 bis 100 kg/$cm^2$) durchgeführt wird.

**Revendications**

1. Procédé de fabrication d'un polymère $\alpha$-oléfinique qui consiste à polymériser au moins une $\alpha$-oléfine de 2 à 10 atomes de carbone en phase gazeuse en présence d'un catalyseur composé d'un composant catalytique solide de titane et d'un composé d'organo-aluminium, caractérisé en ce qu'on effectue le procédé selon la série suivante de paramètres (A) à (E):

—(A) le catalyseur est composé d'un composant catalytique solide de titane contenant un halogène sur un support de composé de magnésium et dudit composé d'organo-aluminium, ledit catalyseur ayant été prétraité en polymérisant en sa présence pas plus de 200 g, par gramme dudit composé catalytique solide de titane, d'au moins une oléfine;

— (B) on maintient le système de polymérisation à l'état fluidisé en l'agitant mécaniquement et en lui insufflant ladite oléfine à l'état gazeux et/ou un hydrocarbure gazeux non polymérisable facilement volatil;

— (C) on introduit ladite oléfine à l'état liquide et/ou un hydrocarbure liquide non polymérisable facilement volatil dans le système de polymérisation et on effectue la polymérisation pendant qu'on gazéifie ladite oléfine et/ou ledit hydrocarbure dans ledit système;

— (D) on liquéfie partiellement ou en totalité l'oléfine gazeuse qui n'a pas éagi et/ou l'hydrocarbure gazeux non polymérisable facilement volatil déchargé du système de polymérisation et on la, ou le, recycle sous forme d'oléfine liquide et/ou d'hydrocarbure dans (C); et

— (E) on insuffle ou introduit ladite oléfine dans le système de polymérisation dans au moins l'un des stades (B) ou (C).

2. Procédé selon la revendication 1, caractérisé en ce que dans ledit composant catalytique solide de titane contenant un halogène supporté sur un composé de magnésium, le rapport atomique Ti/Mg est de 1:2 à 1:100, et le rapport molaire halogène/Ti est de 4:1 à 200:1.

3. Procédé selon la revendication 1 ou 2, caractérisé en ce que ledit composant catalytique solide de titane contenant un halogène sur un support de composé de magnésium contient également un donneur d'électrons, et que le rapport molaire du donneur d'électrons à l'atome de titane est de 0,1:1 à 7:1, et le rapport molaire de l'halogène à l'atome de titane est de 5:1 à 200:1.

4. Procédé selon l'une quelconque des revendications précédentes, caractérisé en ce qu'on effectue ledit traitement de prépolymérisation en (A) à une température de —30°C à 90°C.

5. Procédé selon l'une quelconque des revendications précédentes, caractérisé en ce qu'on effectue ledit traitement de prépolymérisation en (A) en polymérisant l'oléfine en une quantité qui ne dépasse pas 100 g par gramme du composant catalytique solide de titane.

6. Procédé selon l'une quelconque des revendications précédentes, caractérisé en ce que ledit hydrocarbure non polymérisable facilement volatil en (B), (C) et (D) est un hydrocarbure aliphatique ayant 3 à 6 atomes de carbone.

7. Procédé selon l'une quelconque des revendications précédentes, caractérisé en ce que la quantité du composant catalytique solide de titane contenant un halogène sur un support d'un composé de magnésium soumis au traitement de prépolymérisation en (A) est de 0,0005 à 1 millimole, calculée en atome de titane, par litre du volume du système réactionnel de polymérisation en phase gazeuse.

8. Procédé selon l'une quelconque des revendications précédentes, caractérisé en ce que la quantité dudit composé d'organo-aluminium par litre du volume du système réactionnel de polymérisation en phase gazeuse est telle, que le rapport atomique Al/Ti est de 1:1 à 2000:1.

9. Procédé selon l'une quelconque des revendications précédentes, caractérisé en ce qu'on effectue la polymérisation à une température de 30 à 130°C et sous une pression de 98 à 9800 kPa (1 à 100 kg/cm²).

Fig. 1